(19) Europäisches Patentamt
European Patent Office
Office européen des brevets

(11) **EP 0 978 792 A1**

(12) **EUROPEAN PATENT APPLICATION**

(43) Date of publication:
**09.02.2000 Bulletin 2000/06**

(51) Int. Cl.⁷: **G06F 15/78**, G06F 9/38

(21) Application number: **98830480.4**

(22) Date of filing: **05.08.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Italtel s.p.a.**
**20154 Milano (IT)**

(72) Inventor: **Gorla, Giulio**
**21100 Varese (IT)**

(74) Representative: **Giustini, Delio**
**c/o Italtel S.p.A.,**
**Cascina Castelletto**
**20019 Settimo Milanese (MI) (IT)**

(54) **Programmable architecture computer**

(57)     A computer having a control unit (CU) provided with at least one microprogram elaboration unit (EU) which is connected with an input/output control unit (IOU) and with an address formation unit (AF) of at least one main memory (MM), wherein said control unit (CU) is connected in parallel with a plurality of execution modules (XMn), each of which comprises a programmable switch matrix (XSM), to which an internal elaboration unit (XEU), an additional unit for the formation of memory addresses (XAF) and at least one programmable gate matrix (XGn) are connected, respectively.

Fig.2

Printed by Xerox (UK) Business Services
2.16.7/3.6

## Description

Field of the Invention

The present invention relates to a programmable architecture computer, and in particular to a computer having an architecture which can be programmed according to the specific application it is used for.

It is known that computers, as a rule, comprise at least one general-purpose microprocessor connected with a plurality of further auxiliary electronic devices, in order to execute one or more programs including in turn one or more algorithms.

Background Art

To reduce the program execution time, known computers have increasingly sophisticated internal architectures which tend to speed up execution of the programs. For example, the internal memory can be divided into two hierarchic levels (memory and cache) or it is possible to use co-processors or accelerators, for instance co-processors for calculating floating point numbers, dedicated to the execution of some particularly critical algorithms. The latter dedicated processors are however designed to execute a specific set of instructions relevant to a special class of algorithms, for instance relevant to the processing of audio and/or video signals, therefore they cannot be efficiently used for any type of program.

Moreover it should be noted that the design of dedicated processors takes long, for instance 30/35 man/years, therefore they can only be manufactured for big markets requiring a large number of pieces. For markets with a limited number of pieces it is necessary to resort to general-purpose processors that are linked according to a special architecture possibly comprising dedicated processors and/or integrated circuits, in order to create a relatively efficient system which enables a rapid execution of a special class of critical algorithms. The program including the latter algorithms will however have to be developed in such a way as to enable the processor system used to efficiently execute the critical algorithms. However, computer reliability and its possibility of being used for other applications are thus reduced.

Finally, on the market one can find some intermediate type microprocessors which, though they can execute the wide set of instructions of general-purpose microprocessors, are specially suited for the execution of a specific set of instructions. While maintaining the reliability and at the same time reducing the size and the energy dissipation of known computers, intermediate type microprocessors are expensive and anyway not efficient in the execution of programs not including said specific set of instructions.

Object of the Invention

Object of the present invention is therefore to provide a computer that is free of said disadvantages, that is to say a reliable and low-cost computer, which can execute as efficiently as possible each application for which it is used.

Summary of the Invention

Said object is accomplished by means of a computer having its main features specified in the first claim and other features specified in the appended claims.

By virtue of the particular modular architecture and of the complete programmability of each execution module, due to the presence of at least one programmable gate matrix and one programmable switch matrix, the hardware of the computer according to the present invention can be reconfigured and optimized depending on the specific application for which it is used.

As a matter of fact, the critical algorithms of the program to be executed can be examined and selected in advance by means of an analysis carried out on an external computer. Once these critical algorithms have been recognized, it is possible to program, again by means of a computer-assisted analysis, the optimum hardware configuration of the execution modules which will have to execute said critical algorithms. The internal hardware structure of each execution module will therefore be programmed so that one or more critical algorithms can be implemented as efficiently as possible, consistently with the electronic devices which this module has at its disposal.

Thanks to this design technique, it is possible to produce a computer which is optimized for a certain application within 1-2 man/years, that is to say a time which is substantially equal to that required for designing and manufacturing a simple integrated circuit dedicated to a single function.

Another advantage of the computer according to the present invention lies in the fact that, by investigating and building the special architectures for the optimum implementation of the various critical algorithms present in the programs to be executed, a library of architectures is created which can be used for other programs including the same critical algorithms, saving as a consequence time and design resources.

A further advantage of the computer according to the present invention lies in that its internal architecture can practically be reprogrammed in real time thanks to its external interface, so that the architecture can be adjusted each time according to the particular operational conditions of the computer itself.

Breief description of the drawings

Further advantages and features of the computer according to the present invention will become apparent to those skilled in the art from the following detailed description of an embodiment thereof with reference to the enclosed drawings wherein:

- figure 1 shows a simplified block diagram of the computer according to the present invention; and
- figure 2 shows a detailed block diagram of an embodiment of the computer shown in figure 1.

Detailed description of a preferred embodiment

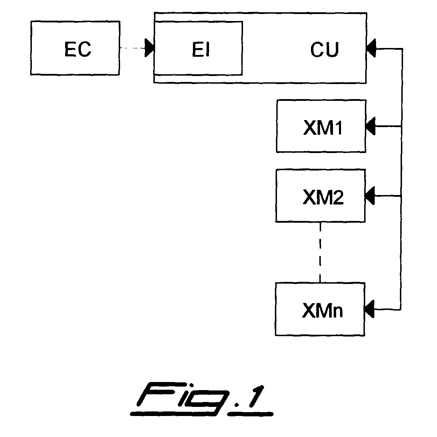

Referring to figure 1, it can be seen that the computer according to the present invention comprises a control unit CU connected in parallel with one or more execution modules XMn, each of which has an architecture, particularly a 32-bit architecture, which can be programmed in a manner which will be described later to implement the critical algorithms belonging to the program which is executed by the control unit itself. In the present embodiment there are seven execution modules XM1, XM2 ... XM7, but it is obvious that in other embodiments of the present invention there can be more than or less than seven execution modules XMn. These modules are connected with the control unit CU by means of a system comprising buses, connectors and cards of a known type.

Therefore the control unit CU, besides running the normal execution of programs, also runs the programming of the execution modules XMn and for this purpose it comprises an external interface EI for receiving one or more electric signals from outside, on the basis of which the programming commands for the architectures of the XMn modules are given. For example, an external personal computer EC of a known type, provided with a suitable control program, can permanently or temporarily be connected with the EI interface to send architecture data to the computer according to the present invention. In the present embodiment, the memory containing the architecture data of the computer is therefore located in the external computer EC, but it is clear that in other embodiments of the present invention the memory containing the architecture data of the computer can also be placed inside the computer itself, in the control unit CU and/or in the execution modules XMn, in which case it is enough to transmit a control signal to the interface EI to select the desired architecture among those stored in the memory.

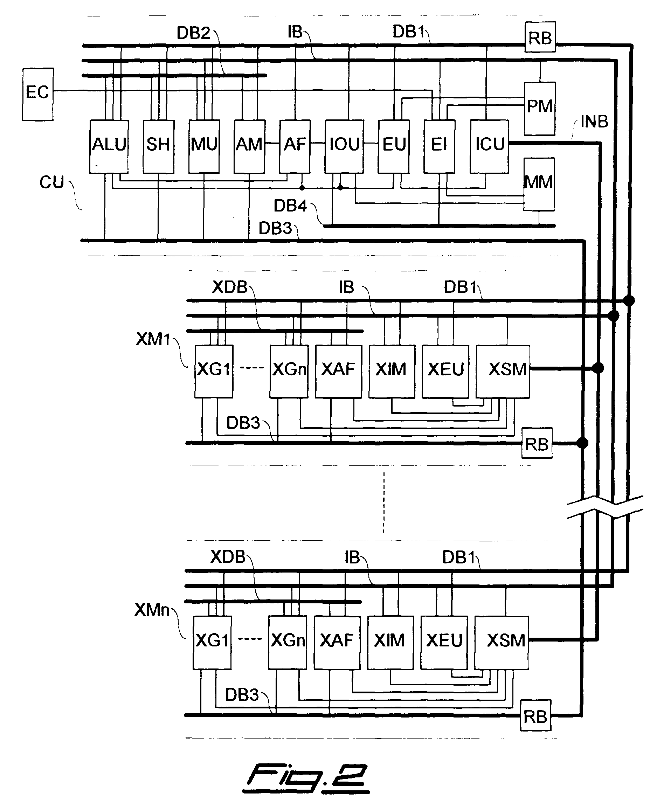

Reference is now made to figure 2 where it can be seen that in the present embodiment the control unit CU comprises a main data bus DB1 provided with a buffer RB, an internal data bus DB2, a secondary data bus DB3 and an instruction bus IB. All these buses are connected with an arithmetic-logic unit ALU which is used to carry out the most important arithmetic and logic operations, with a shift unit SH, also known as a shifter, which is used to carry out bit shifts to the left or to the right of the input numbers, as well as with a multiplier MU which is used to carry out multiplication between two input numbers, particularly 16-bit numbers.

The addresses of the microinstructions which the control unit CU has to execute are calculated by a microprogram elaboration unit EU which receives data from the main data bus DB1 and from the arithmetic-logic unit ALU. The elaboration unit EU incorporates a LIFO stack for microinstruction addresses, so that it can organize up to five nested subroutine calls, arranging them in a sequence and calculating the subsequent address of the microprogram.

The elaboration unit EU employs sixteen input flags for the control of conditioned alternatives, so that the main group of microinstructions is made up of pairs of simple instructions which are selected depending on a binary condition. Some examples of known sequenced instructions are: Continue, Jump, Exit, Call, Return, Dynamic Jump, Dynamic Exit, Dynamic Call. Further non-paired instructions are used for the loading of sequence ordering registers and for the management of the sixteen conditioned alternatives.

The elaboration unit EU receives the input addresses to be calculated from a unit for the formation of memory addresses AF, which is connected with the main data bus DB1 and with an auxiliary memory AM. The latter memory includes an area to store the stacks of the elaboration unit EU and an area to store general-purpose registers. The addresses of the area used to store the stacks of the unit EU are calculated independently for each of the three gates of the auxiliary memory AM (two read gates connected with the data buses DB1 and DB2 and a write gate connected with the data bus DB3), whereas the addresses of the area used to store general-purpose registers are taken out immediately from the current microinstruction. The auxiliary memory AM is synchronized with the frequency of the elaboration unit EU, so that the two readings and the writing from the three gates are carried out in a single clock period. In the present embodiment, the area used to store the stacks of the elaboration unit EU comprises 1024 32-bit cells, whereas the area used to store general-purpose registers comprises 512 cells, also with 32 bits each. To calculate the addresses, the address formation unit AF is connected with the arithmetic-logic unit ALU as well.

The elaboration unit EU is connected in input mode with an input/output control unit IOU which runs the synchronous data exchange with a main memory MM both directly and through an additional internal data bus DB4. The input/output unit IOU decodes and queues instructions for the EU unit. To this end, the IOU unit includes a buffer memory of at least 8 bytes, in order to constantly provide at least one 3-byte instruction with no waiting cycles. The instruction format can be divided into four groups:

- 1-byte instructions;
- 2-byte instructions, consisting of 1 byte for the instruction and 8 bits for one or two parameters;
- 3-byte instructions, consisting of 1 byte for the instruction and 16 bits for one, two or three parameters; and
- long instructions, consisting of 2 bytes for the instruction, by a sequence of 16 bits for the parameters and 16 bits for the termination code.

Most computer instructions consist of 1 or 3 bytes, whereas long instructions are used for atypical operands, for instance 32-bit constants, or for user-definable instructions. Also the input/output control unit IOU is connected with the arithmetic-logic unit ALU to calculate the most frequent jump instructions, as well as with the main data bus DB1 and with the unit for the formation of memory addresses AF.

An interrupt control unit ICU is connected with the data bus DB1 and with an interrupt bus INB to send control signals to the elaboration unit EU, which is also directly connected with the ICU unit. The latter unit is used to run the interrupts generated by the execution modules XMn, as well as by the external interface EI and by the system clock. The managing of the interrupts is always carried out at the end of the current instruction, with the exception of the reset interrupt which is executed immediately. The interface EI, besides being connected with the main memory MM, with the instruction bus IB and with the internal data bus DB4, is bidirectionally connected, for instance by means of a parallel line, with the external computer EC. The computer EC is used to program the execution modules XMn of the computer according to the present invention, which is considered by said computer as a peripheral thereof.

In particular, there are two different communication modes between the computer EC and the computer according to the present invention. The first mode is used at switching on, when memories have not been initialized yet. In this case, the computer is completely controlled by the EC computer, which loads the set of executable microinstructions into a microprogram memory PM, with which it is connected by means of the interface EI. The computer quits this first communication mode only through an initialization microprogram placed at a predetermined address. The second mode is used to gain access to the contents of the microprogram memory PM and of the main memory MM when the computer is working.

Said microprogram memory PM, having in particular a capacity of 32K cells of 96 bits each and being directly connected with the elaboration unit EU, contains a set of instructions that are executable by the computer according to the present invention, each of which comprises a microprogram consisting of a sequence of microinstructions. These microprograms cover all the possible instructions which can be executed by the elaboration unit EU, so that a user, through the interface EI, can store a plurality of specific microprograms which run the algorithms present in the application program. For the computer according to the present invention, these microprograms are a part of its set of instructions and are executed like the rest of the remaining instructions. In general, the whole set of instructions can be adjusted to the algorithms of the program using the same compiler employed to compile the program. Therefore the compiler generates the program which can be executed by the computer together with an optimized set of instructions for the execution of the program itself.

The main memory MM is on the contrary used in a known manner to store data and the code of the program to be executed by the computer according to the present invention. In the present embodiment, the memory MM, which is also synchronized with the clock of the elaboration unit EU, has a capacity of 1M cells of 32 bits each, but it is clear that in other embodiments this capacity can be expanded according to users' requirements.

The various execution modules XMn are suitably connected in parallel with the data buses DB1 and DB3, with the instruction bus IB and with the interrupt bus INB. Particularly, the elaboration units XEU of each execution module XMn are connected with the data bus DB1 and with the instruction bus IB. Each elaboration unit XEU provides control of the relevant execution module XMn according to the parameters received from the control unit CU. This is accomplished by storing the received parameters in an internal memory XIM and executing the function associated with said parameters. The internal memories XIM of the modules XMn can also contain operands and results of the execution of the relevant module. Specifically, each memory XIM comprises two read gates respectively connected with the external data bus DB1 and with an internal data bus XDB, as well as a write gate connected with the data bus DB3, provided with a buffer memory RB, in order to read and write data simultaneously in a single clock period. In the present embodiment, the XIM memories have a capacity of 4K cells of 32 bits each.

In detail, the communication process between the control unit CU and one of the execution modules XMn comprises the following operational steps:

a) the control unit CU writes the operands in the XIM memory of the execution module XMn;
b) the control unit CU sends to the elaboration unit XEU of the execution module XMn the parameters which determine the desired instruction (function code, addresses of the parameters and of the results, number of cycles, and so on);
c) the control unit CU sends to the elaboration unit XEU of the execution module XMn the command to start the desired instruction, thus transferring microprogram control to the elaboration unit XEU;

d) once the instruction execution is terminated, the elaboration unit XEU of the execution module XMn sends an interrupt to the control unit CU; and

e) the control unit CU executes a subroutine according to the interrupt it has received in order to obtain the results processed by the elaboration unit XEU of the execution module XMn.

All control signals generated by the elaboration unit XEU are suitably sent to the various components of the execution module XMn through a programmable switch matrix XSM. By virtue of a special programmed arrangement of the switches of the matrix XSM, it is possible to configure the architecture of the execution module according to the algorithm which has to be implemented. As a matter of fact, all control pathways of the module XMn pass through the matrix XSM, so that a user is free to define the number and the meaning of the control signals to implement the desired algorithm. Moreover, the execution module XMn can employ some reserved signals which are sent between the unused gates of the module components through the switch matrix XSM. Thanks to this arrangement the architecture of the execution module can be easily opened by implementing some user-definable data buses. Other matrix gates XSM can be connected with the data buses DB1 and DB3 to enable programming of connections with the control unit CU and/or with other execution modules XMn. The programming of the matrix XSM, which in the present embodiment is of the known type IQ320 manufactured by the company Icube, can be carried out by the user by means of a suitable dedicated program, generally provided together with the matrix, which is executed by the external computer EC. The control signals generated by the computer EC are sent to the matrix XSM through the interface EI and the data bus DB1 connected with it. The matrix XSM is also connected with the interrupt bus INB to allow sending and receiving interrupts from the control unit CU.

The components of each execution module XMn connected with the relevant XSM matrix can vary according to the required processing complexity, but they generally comprise an address formation unit XAF for the calculation of the addresses of the internal memory XIM containing the operands and the results of the relevant execution module XMn. The internal structure of the XAF unit can also vary according to the required type of processing, however in the present embodiment it comprises three pairs of counters and three adders which are used to calculate independently the addresses of the cells which have to be connected with the gates of the internal memory XIM in the "base + offset" mode. The operands and the algorithms to be implemented through the XMn modules generally consist of vectors, so this mode for the calculation of addresses allows the user to rapidly transform a vector operand (basic address) into its components (offset address). The address formation unit XAF is connected with the data buses DB1, DB3 and XDB.

Besides the address formation unit XAF, the internal memory XIM and the elaboration unit XEU, each execution module XMn suitably comprises one or more programmable gate matrices XG1 ... XGn, which are all connected with the switch matrix XSM, as well as with the data buses DB1, DB3 and XDB and with the instruction bus IB. In the present embodiment, two programmable gate matrices XGn are provided for each execution module XMn, but it is clear that in other embodiments the number of matrices XGn can vary according to the required processing complexity. Each of these programmable gate matrices XGn, made up for instance of a programmable gate matrix of a known type of the XC4000 series of the U.S. company Xitinx, can be configured like a processor to execute an array of logic operations programmed by the user by means of the external computer EC. It is thus possible to adjust the architecture of the computer according to the present invention to the particular algorithm implemented by the corresponding execution module XMn. The internal architecture of the programmable gate matrices XGn can be reconfigured by the user according to the required instructions and in particular, when two or more programmable gate matrices XGn are connected in parallel as in the present embodiment, it is possible to configure in the same way the internal architecture of each gate matrix XGn in order to create a structure of dual processors for parallel data processing. It is clear that the architectures of the gate matrices XGn can be different from one another to create a structure of parallel processors and/or co-processors in case the algorithm to be implemented could not be executed with a single XGn matrix. In most algorithms to be implemented, the architecture of a gate matrix XGn is programmed so that it includes a plurality of multipliers, shifters or other calculation units, whereas the architecture of another gate matrix XGn is programmed so that it includes a plurality of registers for said calculation units, as well as the control pattern for switching internal data pathways.

In the use, the program which the computer according to the present invention has to execute is written in a high level language, for instance C++. By means of a "what-if" procedure, the algorithms of this program are determined which, due to their intensive use, should be implemented through the execution modules XMn. The choice of these "objects" and their consequent transformation into a special architecture of the execution modules XMn cannot therefore be determined in advance, but have to be developed according to the specifications of the program to be executed.

This study is preferably carried out by means of an analysis of the source program with the auxiliary program, generally known under the name of profiler, which executes the source program and provides an estimate of the critical algorithms using information relevant to the execution time of each command belonging to the set of basic commands of the algorithms. Once this data is known, the user can determine which critical algorithms can be implemented by means of the execution modules XMn, considering the following variables:

- time Tc spent by the control unit CU to execute each considered algorithm;
- time Ta spent by the execution module XMn to execute the corresponding part of the program; and
- cost H of additional resources employed due to the use of the execution module XMn.

It is therefore clear that the efficiency of the computer according to the present invention is proportional to the formula $E=(Tc-Ta)/H$ . Time Tc is the basic information, supplied by the profiler, which is investigated to recognize those parts of the program requiring a longer time. Time Ta is not known, but it can be obtained by implementing through a module XMn one of the algorithms requiring a longer time and calculating time employed by the execution module XMn.

Moreover it is clear that the computer according to the present invention comprises or can comprise one or more resources, for instance peripherals, a power unit, input/output devices, etc., which can be used in computers of a known type.

Possible changes and/or additions can be made by those skilled in the art to the embodiment herein described and illustrated without departing from the scope of the invention itself.

**Claims**

1. A computer comprising a control unit (CU) provided with at least one microprogram elaboration unit (EU) which is connected with an input/output control unit (IOU) and with an address formation unit (AF) of at least one main memory (MM), characterized in that said control unit (CU) is connected in parallel with a plurality of execution modules (XMn), each of which comprises a programmable switch matrix (XSM) which is connected with an internal elaboration unit (XEU), an additional unit for the formation of memory addresses (XAF) and at least one programmable gate matrix (XGn), respectively.

2. A computer according to the preceding claim, characterized in that at least one execution module (XMn) comprises an internal memory (XIM) connected with the programmable switch matrix (XSM).

3. A computer according to the preceding claim, characterized in that the control unit (CU) is connected with the execution modules (XMn) through a main data bus (DB1), which is connected with the address formation unit (AF), the microprogram elaboration unit (EU) and the input/output control unit (IOU) of the control unit (CU), as well as with the internal elaboration unit (XEU), the internal memory (XIM), the unit for the formation of memory addresses (XAF) and the programmable gate matrix (XGn) of each execution module (XMn).

4. A computer according to the preceding claim, characterized in that the control unit (CU) is connected with the execution modules (XMn) also through an instruction bus (IB) which is connected with the programmable switch matrix (XSM), the internal elaboration unit (XEU), the internal memory (XIM) and the programmable gate matrix (XGn) of each execution module (XMn).

5. A computer according to claim 3 or 4, characterized in that the control unit (CU) is connected with the execution modules (XMn) also through a secondary data bus (DB3) which is connected with the unit for the formation of memory addresses (XAF) and the programmable gate matrix (XGn) of each execution module (XMn).

6. A computer according to any of the preceding claims, characterized in that each execution module (XMn) comprises an internal data bus (XDB) which is connected with the unit for the formation of memory addresses (XAF) and with the programmable gate matrix (XGn) of each execution module (XMn).

7. A computer according to any of the preceding claims, characterized in that each execution module (XMn) comprises two programmable gate matrices (XGn) connected with the programmable switch matrix (XSM).

8. A computer according to any of the preceding claims, characterized in that the control unit (CU) comprises an external interface (EI) connected with the main memory (MM) and with the instruction bus (IB), through which configuration data of the programmable data matrices (XGn) and of the programmable switch matrices (XSM) of the execution modules (XMn) are sent.

9. A computer according to the preceding claim, characterized in that the external interface (EI) is connected with an external computer (EC) provided with at least one memory for configuration data of the programmable gate matrices (XGn) and of the programmable switch matrices (XSM) of the execution modules (XMn).

10. A computer according to any of the preceding claims, characterized in that the control unit (CU) comprises an interrupt control unit (ICU) connected with the main data bus (DB1), with the microprogram elaboration unit (EU) and with an interrupt bus (INB), to which programmable switch matrices (XSM) of the execution modules (XMn) are in turn connected.

**11.** A computer according to any of the preceding claims, characterized in that the control unit (CU) comprises a microprogram memory (PM) connected with the microprogram elaboration unit (EU), with the external interface (EI) and with the instruction bus (IB), said microprogram memory (PM) being suitable to store microprograms relevant to instructions that can be executed by the microprogram elaboration unit (EU).

**12.** A computer according to any of the preceding claims, characterized in that the control unit (CU) comprises an auxiliary memory (AM) connected with the address formation unit (AF), with the main data bus (DB1), with the secondary data bus (DB3) and with an internal data bus (DB2), said auxiliary memory (AM) being suitable to store stacks of the microprogram elaboration unit (EU), as well as general-purpose registers.

**13.** A computer according to any of the preceding claims, characterized in that the control unit (CU) comprises an arithmetic-logic unit (ALU) connected with the address formation unit (AF), with the microprogram elaboration unit (EU), with the input/output control unit (IOU), with the main data bus (DB1), with the secondary data bus (DB3) and with the internal data bus (DB2).

**14.** A computer according to any of the preceding claims, characterized in that the control unit (CU) comprises a shifter (SH) connected with the main data bus (DB1), with the secondary data bus (DB3) and with the internal data bus (DB2).

**15.** A computer according to any of the preceding claims, characterized in that the control unit (CU) comprises a multiplier (MU) connected with the main data bus (DB1), with the secondary data bus (DB3) and with the internal data bus (DB2).

**16.** A computer according to any of the preceding claims, characterized in that the control unit (CU) comprises a further internal data bus (DB4) which is connected with the input/output control unit (IOU), the external interface (EI) and the main memory (MM).

**17.** A computer according to any of the preceding claims, characterized in that at least one memory (AM, MM) of the control unit (CU) is synchronized with the microprogram elaboration unit (EU).

**18.** A process for the communication of data and instructions between the control unit (CU) and one of the execution modules (XMn) of the computer according to any of the preceding claims, characterized in that it comprises the following operational steps:

- the control unit (CU) writes the operands into the internal memory (XIM) of the execution module (XMn);
- the control unit (CU) sends to the elaboration unit (XEU) of the execution module (XMn) the parameters which determine the desired instruction;
- the control unit (CU) sends to the elaboration unit (XEU) of the execution module (XMn) the command to start the desired instruction, thus transferring microprogram control to the elaboration unit (XEU);
- once the instruction execution is terminated, the elaboration unit (XEU) of the execution module (XMn) sends an interrupt to the control unit (CU); and
- the control unit (CU) executes a subroutine according to the interrupt it has received in order to obtain the results processed by the elaboration unit (XEU) of the execution module (XMn).

Fig.1

Fig.2

## EUROPEAN SEARCH REPORT

European Patent Office

**Application Number**

EP 98 83 0480

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 600 845 A (GILSON KENT L)<br>4 February 1997<br>* the whole document * | 1,8,9 | G06F15/78<br>G06F9/38 |
| A | ISELI C ET AL: "SPYDER: A SURE( SUPERSCALAR AND RECONFIGURABLE) PROCESSOR"<br>JOURNAL OF SUPERCOMPUTING,<br>vol. 9, no. 3, 1 January 1995, pages 231-252, XP000589467<br>* page 233, paragraph 2 - page 236; figure 2 * | 1 | |
| A | EP 0 825 540 A (SIEMENS AG)<br>25 February 1998<br>* column 5, line 47 - column 7, line 42; figure 2 * | 1 | |
| A | WO 98 32071 A (INFINITE TECHNOLOGY CORP)<br>23 July 1998<br>* abstract; figure 3 * | 1 | |

**TECHNICAL FIELDS SEARCHED (Int.Cl.6)**

G06F

The present search report has been drawn up for all claims

| Place of search | Date of completion of the search | Examiner |
|---|---|---|
| THE HAGUE | 18 January 1999 | Michel, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 98 83 0480

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-1999

| Patent document cited in search report | | Publication date | Patent family member(s) | | Publication date |
|---|---|---|---|---|---|
| US 5600845 | A | 04-02-1997 | NONE | | |
| EP 0825540 | A | 25-02-1998 | DE | 19634031 A | 26-02-1998 |
| | | | JP | 10105402 A | 24-04-1998 |
| WO 9832071 | A | 23-07-1998 | NONE | | |

For more details about this annex : see Official Journal of the European Patent Office, No. 12/82